Europäisches Patentamt

European Patent Office

Office européen des brevets

(11) Veröffentlichungsnummer: **0 299 431 B1**

(12) # EUROPÄISCHE PATENTSCHRIFT

(45) Veröffentlichungstag der Patentschrift: **02.01.92**

(51) Int. Cl.⁵: **F16F 9/36**, F16J 15/16

(21) Anmeldenummer: **88111141.3**

(22) Anmeldetag: **12.07.88**

(54) **Gasfeder, welche mit einem schwimmend angeordneten Dichtring mit Ventilfunktion ausgerüstet ist.**

(30) Priorität: **17.07.87 DE 3723654**

(43) Veröffentlichungstag der Anmeldung:
**18.01.89 Patentblatt 89/03**

(45) Bekanntmachung des Hinweises auf die
Patenterteilung:
**02.01.92 Patentblatt 92/01**

(84) Benannte Vertragsstaaten:
**DE ES FR GB IT**

(56) Entgegenhaltungen:
**DE-A- 3 042 076**
**DE-A- 3 503 537**
**FR-B- 2 234 811**
**US-A- 4 030 716**
**US-A- 4 342 447**

(73) Patentinhaber: **Stabilus GmbH**
**Wallersheimer Weg 100**
**W-5400 Koblenz-Neuendorf(DE)**

(72) Erfinder: **Körtgen, Bernd, Dipl.-Ing. (FH)**
**Johanniterstrasse 3**
**W-5488 Adenau(DE)**
Erfinder: **Morgen, Helmut, Dipl.-Ing. (FH)**
**Auf dem Heidchen 3**
**W-5441 Mannebach(DE)**
Erfinder: **Heinrichs, Heinz-Josef, Dr. Ing.**
**Winninger Strasse 50**
**W-5400 Koblenz-Metternich(DE)**
Erfinder: **Fuhrmann, Castor, Dipl.-Ing. (FH)**
**Oberdorfstrasse 9**
**W-5441 Brachtendorf(DE)**
Erfinder: **Freitag, Herbert**
**Johannesstrasse 67**
**W-5400 Koblenz-Metternich(DE)**

(74) Vertreter: **Weickmann, Heinrich, Dipl.-Ing. et al**
**Patentanwälte Dipl.-Ing. H.Weickmann**
**Dipl.-Phys.Dr. K.Fincke Dipl.-Ing.**
**F.A.Weickmann Dipl.-Chem. B. Huber Dr.-Ing.**
**H. Liska Dipl.-Phys.Dr. J. Prechtel Postfach**
**860820**
**W-8000 München 86(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gasfeder mit einem Behälterrohr, welches eine Achse und zwei Enden besitzt und einen Hohlraum begrenzt, einer Kolbenstangenführung an mindestens einem Ende des Behälterrohrs, einer in Achsrichtung des Behälterrohrs durch die Kolbenstangenführung hindurchgeführten Kolbenstange und einer Dichtungsanordnung an dem einen Ende,
wobei diese Dichtungsanordnung ausgeführt ist mit einer ersten axial äußeren Dichtungseinheit und einer zweiten axial inneren Dichtungseinheit,
wobei die zweite Dichtungseinheit von einem Dichtring aus elastomerem Werkstoff gebildet ist,
wobei dieser Dichtring an einer Innenumfangsfläche des Behälterrohrs und an einer Außenumfangsfläche der Kolbenstange dichtend anliegt,
wobei zwischen der ersten Dichtungseinheit und der zweiten Dichtungseinheit eine Flüssigkeitskammer gebildet ist, wobei diese Flüssigkeitskammer eine Flüssigkeit enthält, wobei zwischen der zweiten Dichtungseinheit und dem anderen Ende des Behälterrohrs ein Arbeitsraum gebildet ist und
wobei dieser Arbeitsraum ein Volumen von unter Druck stehendem Gas enthält.

In Abhängigkeit der Bewegungsgeschwindigkeit der Kolbenstange und der Einbaulage einer solchen Gasfeder kann es vorkommen, daß der Druck in der Gaskammer geringer wird als der Druck in der Flüssigkeitskammer. Dadurch ist es möglich, daß sich hier ein unzulässig hoher Druck aufbauen kann. Dabei kann es zum Verkanten oder zur Zerstörung der Dichtelemente sowie der mechanischen Anschläge im Bereich des Behälterrohres kommen. Um dies zu vermeiden, wurde bereits mit der DE-OS 35 03 537 vorgeschlagen, den Dichtring zusätzlich über eine Scheibe mit einer mechanischen Feder vorzuspannen und dadurch den Druck in der Flüssigkeitskammer zu erhöhen, sowie den Dichtring in seiner vorgesehenen Lage in einer zur Gasfederachse senkrechten Ebene zu halten.

In der DE-OS 30 42 076 ist ein derartiger Dichtungsring bekannt, dessen radial innere und äußere Dichtflächen annähernd die gleichen axialen Ausdehnungen aufweisen. Der Dichtring enthält eine Stützscheibe. Die radial innere Dichtfläche ist konisch ausgebildet derart, daß bei Überdruck in der Flüssigkeitskammer Flüssigkeit in den Arbeitsraum entweichen kann.

Aufgabe der vorliegenden Erfindung ist es, eine Dichteinrichtung der eingangs beschriebenen Art zu schaffen, die ohne zusätzliche Führungs- und Stützelemente auskommt, die erforderliche Führungsstabilität aufweist, durch stetige Anlage an der Flüssigkeit in der Flüssigkeitskammer eine verbesserte Außenabdichtung einer Gasfeder gewährleistet, jedoch bei Überdruck in der Flüssigkeitskammer einen Druckausgleich erlaubt.

Gelöst wird die Aufgabe dadurch, daß der Dichtring - in einem die Achse des Behälterrohrs enthaltenden Läangsschnitt betrachtet - einen radial äußeren Wurzelteil und einen radial inneren Lippenteil besitzt,
wobei der Wurzelteil mit Dichtwulsten an der Innenumfangsfläche des Behälterrohrs anliegt,
wobei am radial inneren Ende des Lippenteils ein annähernd dreieckförmig nach radial innen verjüngter Dichtkantenteil vorgesehen ist, welcher an der Umfangsfläche der Kolbenstange anliegt und
wobei die axiale Abmessung des Lippenteils an der Basis des Dichtkantenteils wesentlich kleiner ist als die axiale Abmessung des Wurzelteils.

Durch diese Maßnahmen wird ein Dichtring geschaffen, dessen Außenkontur durch die Mehrwulst-Konfiguration gegen die Innenwandung des Behälterrohres abdichtet und der durch den Fülldruck im Arbeitsraum stets gegen die Flüssigkeitsvorlage in der Flüssigkeitskammer gedrückt und ihr auch bei Druckabfall folgen kann. Durch die relativ zum Lippenteil große axiale Ausdehnung des Wurzelteils ist der Dichtring lagestabil ohne zusätzliche Stützelemente in dem Zylinder geführt. Durch die relativ zum Wurzelteil geringe axiale Ausdehnung des Lippenteils kann der Lippenteil bei Überdruck in der Flüssigkeitskammer relativ zum Wurzelteil zum Arbeitsraum hin verschwenken, so daß durch das Verschwenken selbst oder durch Entweichen von Flüssigkeit in den Arbeitsraum eine Druckentlastung in der Flüssigkeitskammer stattfindet.

Vorteilhafte Ausführungen sind in den Unteransprüchen beschrieben. Die Erfindung ist in der beiliegenden Zeichnung anhand eines Ausführungsbeispiels dargestellt und wird nachfolgend näher beschrieben; es zeigt:

Fig. 1    den Schnitt durch die Dichtungsvorrichtung einer Gasfeder mit Druckgasraum und Flüssigkeitsvorlage;

Fig. 2    einen Dichtring nach der Fig. 1 mit symmetrischer wulstförmiger Dichtlippe;

Fig. 3    einen Dichtring mit asymmetrischer innenliegender Dichtkante;

Fig. 4    einen Dichtring nach der Fig. 1 mit symmetrischer innenliegender Dichtkante.

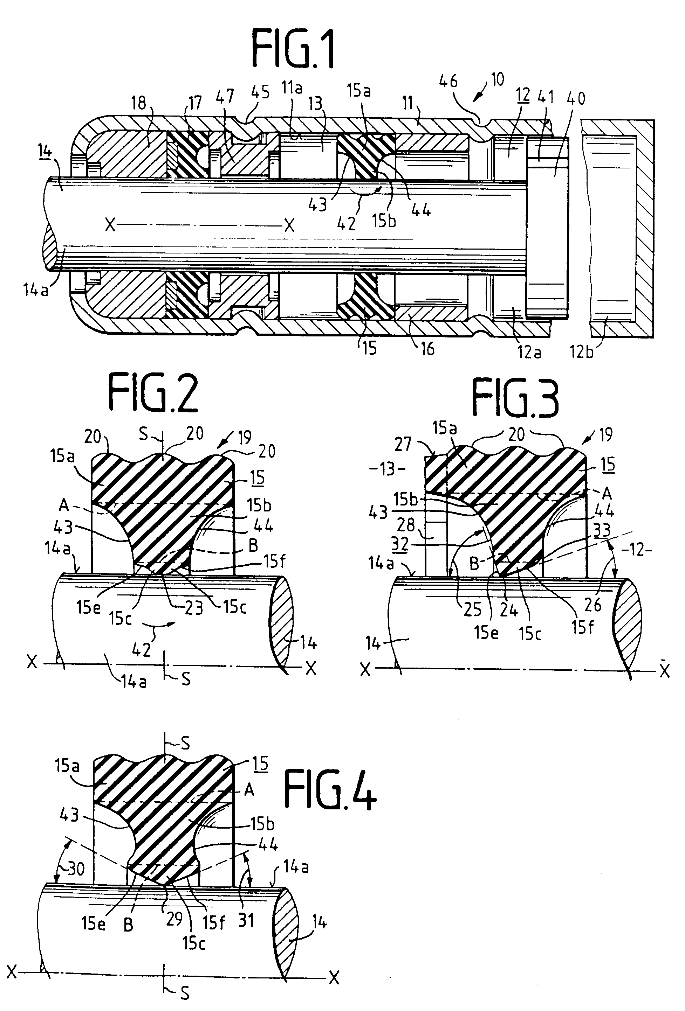

Die in der Fig. 1 ausschnittweise dargestellte Gasfeder 10 besteht im wesentlichen aus einem Behälterrohr 11, das in einen mit Druckgas gefüllten Arbeitsraum 12 und eine mit einer Flüssigkeitsvorlage gefüllte Flüssigkeitskammer 13 unterteilt ist. Aus dem Behälterrohr 11 ist eine Kolbenstange 14 herausgeführt, die in einer Kolbenstangenführung 18 geführt ist. Der Kolbenstangenführung 18 ist eine Kolbenstangendichtung 17 zugeordnet, die das Behälterrohr 11 nach außen hin abschließt.

Der Arbeitsraum 12 und die Flüssigkeitskammer 13 sind durch einen Dichtring 15 voneinander getrennt, wobei der Dichtring 15 auf der Seite des Arbeitsraumes 12 von einem Anschlagring 16 beaufschlagt ist. Der Dichtring 15 besteht aus einem Elastomer und weist an seiner Außenkontur 19 Dichtwülste 20 auf; bei dem gezeigten Ausführungsbeispiel sind drei Dichtwülste vorgesehen, mit denen der Dichtring 15 an der Innenoberfläche des Behälterrohres 11 dichtend anliegt.

Wie die Fig. 2 zeigt, ist der Dichtring 15 nach radial innen zu einer Dichtlippe 15b verjüngt, die in einen Dichtwulst 23 übergeht, der auf der Oberfläche 14a der Kolbenstange 14 aufliegt. Der Dichtwulst 23 ist symmetrisch ausgebildet und weist einen vorbestimmbaren Radius auf.

Bei der in der Fig. 3 dargestellten Ausführungsform geht die Dichtlippe 15b nach radial innen in eine asymmetrische Dichtkante 24 über. Die Dichtkante 24 weist dabei auf der der Flüssigkeitskammer 13 zugewandten Seite einen äußeren Dichtwinkel 25 und auf ihrer dem Arbeitsraum 12 zugewandten Seite einen inneren Dichtwinkel 26 auf. Der äußere Dichtwinkel 25 ist drei- bis fünfmal größer als der innere Dichtwinkel 26. Die Dichtkante 24 liegt dabei im Bereich einer Außenseite 32 der Dichtlippe 15b. Die Entfernung zwischen der Dichtkante 24 und einer Innenseite 33 der Dichtlippe 15b ist etwa vier- bis sechsmal größer als die Entfernung zwischen der Dichtkante 24 und der Außenseite 32. Um die derart asymmetrisch ausgebildete Dichtlippe 15b automatisch montieren zu können, ist ein einseitiger Bund 27 oder sind entsprechend vorstehende Erkennungsnoppen 28 vorgesehen.

Bei der in der Fig. 4 dargestellten Ausführungsform ist die Dichtlippe 15b mit einer symmetrischen Dichtkante 29 versehen. Die Dichtkante 29 weist einen äußeren Dichtwinkel 30 und einen gleich großen inneren Dichtwinkel 31 auf.

Gemäß den Figuren 2,3 und 4 ist der Dichtring 15 durch eine gedachte Linie A jeweils in einen Wurzelteil 15a und den Lippenteil 15b unterteilt. Der Wurzelteil 15a liegt radial außen und liegt mit seinen Dichtwülsten 20 an einer Innenumfangsfläche 11a des Behälterrohrs 11 an. An dem radial inneren Ende des Lippenteils 15b ist jeweils ein annähernd dreieckförmiger Dichtkantenteil 15c erkennbar, der jeweils durch eine gedachte Linie B vom Lippenteil 15b abgrenzbar ist. Der Dichtkantenteil 15c liegt jeweils an der Umfangsfläche 14a der Kolbenstange 14 an.

In Figur 2 ist der Dichtkantenteil 15c mit einer wulstförmigen Dichtkante 23 ausgeführt. An diese Dichtkante 23 schließen Dreiecksseiten 15e, 15f an. Diese Dreiecksseiten 15e, 15f sind gleich lang und bilden mit einer Achse X-X des Behälterrohrs 11 kleine spitze Winkel von gleicher Größe.

In der Ausführungsform nach Figur 3 weist der Dichtkantenteil 15c eine scharfkantige Dichtkante 24 auf. Die Dreiecksseiten 15e und 15f sind hier ungleich lang. Die Dreiecksseite 15e ist kürzer und schließt mit der Achse X-X einen großen spitzen Winkel 25 ein. Die Dreiecksseite 15f ist länger und schließt mit der Achse X-X einen kleinen spitzen Winkel 26 ein. Der Winkel 25 beträgt etwa das vierfache des Winkels 26.

In der Ausführungsform nach Figur 4 weist der dreiecksförmige Dichtkantenteil 15c eine scharfkantige Dichtkante 29 auf. Die Dreiecksseiten 15e und 15f sind hier wiederum annähernd gleich lang und bilden mit der Achse X-X kleine spitze Winkel 30 und 31, welche gleiche Größe haben.

In dem Flüssigkeitsraum 13 ist, wie schon gesagt, eine Flüssigkeit enthalten, die den Flüssigkeitsraum 13 im wesentlichen vollständig füllt. Diese Flüssigkeit erfüllt eine Abdichtungsfunktion, weil es bekanntlich leichter ist, eine Flüssigkeit nach außen abzudichten als ein unter Druck stehendes Gas. Die Flüssigkeit 13 stellt also im gewissen Sinne eine Abdichtung für das Druckgas in dem Arbeitsraum 12 dar.

Auch in dem Arbeitsraum 12 befindet sich neben der Druckgasfüllung eine - wenn auch kleine - Menge der gleichen Flüssigkeit, die sich auch in dem Flüssigkeitsraum 13 befindet, beispielsweise eines Öls.

Bei Betrieb der Gasfeder tritt eine häufige Hin- und Herbewegung der Kolbenstange 14 gegenüber dem Behälterrohr 11 ein. Bei dieser Bewegung kann Flüssigkeit zwischen dem Flüssigkeitsraum 13 und dem Arbeitsraum 12 hin und her geschleppt werden. Je nach der Form des Dichtrings 15 und je nach der Stellung der Gasfeder im Raum kann der Flüssigkeitstransport in verschiedene Richtungen stattfinden. So ist es möglich, daß ein Flüssigkeitstransport in Form eines auf der Kolbenstange 14 haftenden Films bevorzugt von dem Gasraum 12 zu dem Flüssigkeitsraum 13 stattfindet. Durch diesen Flüssigkeitstransport kann der Flüssigkeitsraum 13 überfüllt werden. Andererseits ist die Kolbenstange 14 mit einem Kolben 40 verbunden, welcher den Arbeitsraum 12 in zwei Teilräume 12a und 12b unterteilt. Der Kolben 40 ist durch eine gedrosselte Verbindungsbohrung 41 überbrückt. Wenn nun der Kolben 40 bei einer raschen Einwärtsbewegung der Kolbenstange 14 in Fig. 1 sich nach rechts bewegt, so vergrößert sich der Teilarbeitsraum 12a. Wegen der Drosselwirkung der gedrosselten Verbindungsbohrung 41 tritt deshalb in dem Arbeitsraum 12a ein reduzierter Druck auf. Wenn nun andererseits der Flüssigkeitsraum 13 bereits überfüllt ist und ebenfalls unter Druck der Flüssigkeit steht, so bedeutet das Auftreten eines reduzierten Drucks in dem Teilarbeitsraum 12a, daß der Dichtring 15 in Figur 1 nach rechts belastet wird. Diese Belastung könnte so groß werden, daß der Dichtring 15 beschädigt oder zerstört wird und damit die Gasfeder 10 insgesamt unbrauchbar wird. Dank der erfindungsgemäßen Ausgestaltung des Dichtrings 15 mit einem Lippenteil 15b tritt aber nun eine Druckentlastung in dem Flüssigkeitsraum 13 ein. Der Lippenteil 15b kann gegenüber dem Wurzelteil 15a in Richtung des Pfeiles 42 gemäß Figur 1 und 2 verschwenken, wobei ein weiterer Abbau des Überdrucks in dem Flüssigkeitsraum 13 auch dadurch eintreten kann, daß Flüssigkeit nach dem Arbeitsraum 12 hin entweicht.

Wenn andererseits der Flüssigkeitstransport durch das Hin- und Hergehen der Kolbenstange 14 von dem Flüssigkeitsraum 13 nach dem Arbeitsraum 12 hin erfolgt, etwa weil die Gasfeder mit ihrer Achse X-X im wesentlichen vertikal angeordnet ist und weil die Kolbenstange 14 nach oben aus dem Behälterrohr 11 austritt, so kann sich der Dichtring 15 in Figur 1 nach links bewegen, weil er innerhalb des Behälterrohrs 11 nach links frei schwimmend angeordnet ist. Die Stellung des Dichtrings 15a kann sich also immer der Füllung der Flüssigkeitskammer 13 anpassen. Damit ist auch bei einer langsamen Entleerung der Flüssigkeitskammer 13, die zwar unerwünscht, aber nicht unter allen Umständen vollständig zu vermeiden ist, die Gefahr einer Zerstörung des Dichtrings 14 ausgeschlossen.

In Figur 2 ist der dreieckförmige Dichtkantenteil 15c im wesentlichen symmetrisch in bezug auf eine Symmetrieebene S-S ausgebildet. Bei dieser Ausführungsform ist die Flüssigkeitsdrift über längere Zeit hinweg in beiden Richtungen die gleiche, so daß der Flüssigkeitsinhalt der Flüssigkeitskammer 13 sich nicht wesentlich ändert. Die Dichtkante 23 ist wulstförmig ausgebildet. Diese wulstförmige Ausbildung ist insbesondere im Hinblick auf eine lange Haltbarkeit des Dichtringes 15 gewählt.

In der Ausführungsform nach Figur 3 ist der dreieckförmige Dichtkantenteil 15c asymmetrisch ausgebildet. Die lange Dreiecksseite 15f mit kleinem spitzen Winkel 26 ist der Innenseite 33 der Dichtlippe und damit dem Arbeitsraum 12 zugekehrt. Die kurze Dreiecksseite 15e mit dem großen spitzen Winkel 25 ist der Außenseite des Dichtringes 15 und damit dem Flüssigkeitsraum 13 zugekehrt. Es hat sich gezeigt, daß bei dieser Ausführungsform während des Hin- und Hergangs der Kolbenstange 14 ein bevorzugter Flüssigkeitstransport von dem Arbeitsraum 12 nach dem Flüssigkeitsraum 13 stattfindet. Man wird diese Ausführungsform der Figur 3 deshalb insbesondere wählen, wenn die Gasfeder in vertikaler Lage in der Konstruktion so eingebaut ist, daß die Kolbenstange 14 nach oben aus dem Behälterrohr 11 austritt. In einer solchen Einbausituation besteht schwerkraftbedingt eine Tendenz zum Flüssigkeitsaustritt aus der Flüssigkeitskammer 13 in Richtung des Arbeitsraumes 12. Diese Tendenz wird dadurch kompensiert, daß wegen der in Figur 3 dargestellten asymmetrischen Form des dreieckförmigen Dichtkantenteils 15c eine Fördertendenz von Flüssigkeit von dem Arbeitsraum 12 zu der Flüssigkeitskammer 13 hin besteht.

In den Figuren 1, 2 und 3 ist der Lippenteil 15b durch stetig gekrümmte Flanken 43,44 begrenzt. Man erkennt, daß die Flanken 43,44 an ihrem radial äußeren Ende eine Tangente besitzen, welche einen kleinen spitzen Winkel mit der Achse X-X einschließt. Andererseits besitzen die Flanken 43 an ihren radial inneren Enden eine Tangente, welche zu der Achse X-X im wesentlichen senkrecht steht.

Man erkennt aus den Figuren 2 und 3 weiter, daß der Wurzelteil 15a in radialer Richtung etwa 30 % des Radialabstandes zwischen der Außenumfangsfläche 14a der Kolbenstange und der Innenumfangsfläche 11a des Behälterrohrs einnimmt.

Schließlich erkennt man, daß die axiale Länge des Lippenteils 15b - am radialen Ort der gedachten Linien B gemessen - etwa 40 % der axialen Länge des Wurzelteils 15a ausmacht. Es sei hier noch vermerkt, daß die gedachte Linie B von der Außenumfangsfläche 14a der Kolbenstange 14 einen Abstand besitzt, der etwa 10 bis 15 % des radialen Abstandes zwischen der Außenumfangsfläche 14a und der Innenumfangsfläche 11a ausmacht.

In der Ausführungsform nach Figur 4 sind die Flanken 43 und 44 etwas anders gestaltet als in der Ausführungsform nach den Figuren 2 und 3: Die axiale Bemessung des Lippenteils 15b nimmt hier von der Linie A zur Linie B hin zunächst ab, um dann bei weiterer Annäherung an die Linie B wieder zuzunehmen. Die Dichtkante 29 ist in Figur 4 wiederum symmetrisch in bezug auf die Symmetrieebene S-S angeordnet und ist scharfkantig. Diese Ausbildungsform sorgt wegen der Scharfkantigkeit der Dichtkante 29 für eine weitgehende Unterdrückung des Flüssigkeitstransportes in beiden Richtungen.

Zu Figur 1 ist noch nachzutragen, daß die Kolbenstangendichtung 17 durch einen Sicherungsring 47 in axialer Richtung festgelegt ist. Dieser Sicherungsring 47 ist durch einen einwärts geformten Wulst 45 axial festgelegt.

Der Dichtring 15 ist durch den Anschlagring 16 nach axial rechts festgelegt, wobei dieser Anschlagring 16 durch einen radial einwärts geformten Wulst 46 des Behälterrohrs 11 abgestützt ist.

**Patentansprüche**

1. Gasfeder umfassend ein Behälterrohr (11), welches eine Achse (X-X) und zwei Enden besitzt und einen Hohlraum (12,13) begrenzt, eine Kolbenstangenführung (18) an mindestens einem Ende des Behälterrohrs (11), eine in Achsrichtung (X-X) des Behälterrohrs (11) durch die Kolbenstangenführung (18) hindurchgeführte Kolbenstange (14) und eine Dichtungsanordnung (15,17) an dem einen Ende, wobei diese Dichtungsanordnung (15,17) ausgeführt ist mit einer ersten axial äußeren Dichtungseinheit (17) und einer zweiten axial inneren Dichtungseinheit (15), wobei die zweite Dichtungseinheit (15) von einem Dichtring (15) aus elastomerem Werkstoff gebildet ist, wobei dieser Dichtring (15) an einer Innenumfangsfläche (11a) des Behälterrohrs (11) und an einer Außenumfangsfläche (14a) der Kolbenstange (14) dichtend anliegt, wobei zwischen der ersten Dichtungseinheit (17) und der zweiten Dichtungseinheit (15) eine Flüssigkeitskammer (13) gebildet ist, wobei diese Flüssigkeitskammer (13) eine Flüssigkeit enthält, wobei zwischen der zweiten Dichtungseinheit (15) und dem anderen Ende des Behälterrohrs (11) ein Arbeitsraum (12) gebildet ist, wobei dieser Arbeitsraum (12) ein Volumen von unter Druck stehendem Gas enthält, **dadurch gekennzeichnet,** daß der Dichtring (15) - in einem die Achse (X-X) des Behälterrohrs (11) enthaltenden Längsschnitt betrachtet - einen radial äußeren Wurzelteil (15a) und einen radial inneren Lippenteil (15b) besitzt, wobei der Wurzelteil (15a) mit Dichtwulsten (20) an der Innenumfangsfläche (11a) des Behälterrohrs (11) anliegt, wobei am radial inneren Ende des Lippenteils (15b) ein annähernd dreieckförmig nach radial innen verjüngter Dichtkantenteil (15c) vorgesehen ist, welcher an der Umfangsfläche (14a) der Kolbenstange (14) anliegt und wobei die axiale Abmessung des Lippenteils (15b) an der Basis des Dichtkantenteils (15c) wesentlich kleiner ist als die axiale Abmessung des Wurzelteils (15a).

2. Gasfeder nach Anspruch 1, **dadurch gekennzeichnet,** daß der Wurzelteil (15a) an seinen in axialer Richtung beabstandeten Enden je einen Dichtwulst (20) aufweist.

3. Gasfeder nach Anspruch 2, **dadurch gekennzeichnet,**

daß zwischen den endständigen Dichtwulsten (20) mindestens ein weiterer Dichtwulst (20) angeordnet ist.

4. Gasfeder nach einem der Ansprüche 1 bis 3, **dadurch gekennzeichnet,** daß die Dichtwülste (20) - im achsenthaltenden Schnitt betrachtet - ein wellenförmiges Profil ergeben.

5. Gasfeder nach einem der Ansprüche 1 bis 4, **dadurch gekennzeichnet,** daß die radiale Abmessung des Wurzelteils (15a) weniger als 50 % vorzugsweise ca. 40 %, des radialen Abstandes zwischen der Außenumfangsfläche (14a) der Kolbenstange (14) und der Innenumfangsfläche (11a) des Behälterrohrs (11) beträgt.

6. Gasfeder nach einem der Ansprüche 1 bis 5, **dadurch gekennzeichnet,** daß der Lippenteil (15b) im mittleren Bereich der axialen Abmessung des Wurzelteils (15a) angeordnet ist.

7. Gasfeder nach einem der Ansprüche 1 bis 6, **dadurch gekennzeichnet,** daß der Lippenteil (15b) - im achsenthaltenden Schnitt betrachtet - durch zwei im wesentlichen stetig verlaufende konkav gekrümmte Flanken (43,44) definiert ist.

8. Gasfeder nach Anspruch 7, **dadurch gekennzeichnet,** daß jede Flanke (43,44) an ihrem radial äußeren Ende eine Tangente besitzt, welche einen kleinen spitzen Winkel mit der Achse (X-X) des Behälterrohrs (11) einschließt und daß jede Flanke (43,44) an ihrem radial inneren Ende eine Tangente besitzt, welche zur Achse (X-X) im wesentlichen senkrecht steht.

9. Gasfeder nach einem der Ansprüche 1 bis 8, **dadurch gekennzeichnet,** daß die axiale Abmessung des Lippenteils (15b) an der Basis des Dichtkantenteils (15c), nämlich an einem radialen Ort (B), welcher von der Außenumfangsfläche (14a) der Kolbenstange (14) um eine Strecke entfernt ist, die etwa 15 bis 20 % des radialen Abstandes zwischen der Außenumfangsfläche (14a) der Kolbenstange (14) und der Innenumfangsfläche (11a) des Behälterrohrs (11) beträgt, weniger als 50 %, vorzugsweise ca. 35 %, der axialen Abmessung des Wurzelteils (15a) beträgt.

10. Gasfeder nach einem der Ansprüche 1 bis 9, **dadurch gekennzeichnet,**

daß der Dichtring (15) annähernd symmetrisch ist in bezug auf eine zur Achse (X-X) des Behälterrohrs (11) senkrechte Symmetrieebene (S-S).

11. Gasfeder nach einem der Ansprüche 1 bis 10, **dadurch gekennzeichnet,** daß der Dichtring (15) Unterscheidungsmerkmale (27) aufweist, welche die Unterscheidung zwischen den beiden axialen Enden des Dichtrings (15) gestatten.

12. Gasfeder nach einem der Ansprüche 1 bis 11, **dadurch gekennzeichnet,** daß der Dichtkantenteil (15c) eine wulstförmige gerundete Dichtkante (23) zur Anlage an der Außenumfangsfläche (14a) der Kolbenstange (14) aufweist.

13. Gasfeder nach einem der Ansprüche 1 bis 11, **dadurch gekennzeichnet,** daß der Dichtkantenteil (15c) eine scharfkantige Dichtkante (24) zur Anlage an der Außenumfangsfläche (14a) der Kolbenstange (14) aufweist.

14. Gasfeder nach einem der Ansprüche 1 bis 13, **dadurch gekennzeichnet,** daß der dreieckförmige Dichtkantenteil (15c) mit zwei auf die Dichtkante (29) zulaufenden Dreiecksseiten (15e,15f) ausgeführt ist, welche im wesentlichen gleich lang sind und gleich große Winkel (30,31) mit der Achse (X-X) des Behälterrohrs einschließen.

15. Gasfeder nach einem der Ansprüche 1 bis 13, **dadurch gekennzeichnet,** daß der dreieckförmige Dichtkantenteil (15c) mit zwei unterschiedlich langen auf die Dichtkante (24) zulaufenden Dreiecksseiten (15e,15f) ausgeführt ist, von denen die längere (15f) einen kleineren spitzen Winkel (26) mit der Achse (X-X) des Behälterrohrs (11) einschließt und die kürzere (15e) einen größeren spitzen Winkel (25) mit der Achse (X-X) des Behälterrohrs (11) einschließt.

16. Gasfeder nach Anspruch 15, **dadurch gekennzeichnet,** daß der größere spitze Winkel (25) ca. drei- bis fünfmal so groß ist wie der kleinere spitze Winkel (26).

17. Gasfeder nach einem der Ansprüche 15 und 16, **dadurch gekennzeichnet,** daß die längere Dreiecksseite (15f) dem Arbeitsraum (12) und die kürzere Dreiecksseite (15e) dem Flüssigkeitsraum (13) zugekehrt ist.

18. Gasfeder nach einem der Ansprüche 1 bis 17, **dadurch gekennzeichnet,** daß auch der Arbeitsraum (12) Flüssigkeit enthält.

19. Gasfeder nach einem der Ansprüche 1 bis 18, **dadurch gekennzeichnet,** daß der Dichtring (15) zum anderen Ende der Gasfeder (10) hin durch Anschlagmittel (46,16) festlegbar ist.

20. Gasfeder nach Anspruch 19, **dadurch gekennzeichnet,** daß die Anschlagmittel (16,46) einen radial einwärts verformten Wulst (46) des Behälterrohrs (11) und eine an diesem Wulst (46) in axialer Richtung anstoßende Distanzhülse (16) umfassen.

21. Gasfeder nach einem der Ansprüche 1 bis 20, **dadurch gekennzeichnet,** daß der Dichtring (15) zur ersten Dichtungseinheit (17) hin frei beweglich und durch die in der Flüssigkeitskammer (13) enthaltene Flüssigkeit abgestützt ist.

22. Gasfeder nach einem der Ansprüche 1 bis 21, **dadurch gekennzeichnet,** daß die erste Dichtungseinheit (17) auf ihrer dem anderen Ende des Behälterrohrs zugekehrten Seite einen Sicherungsring (47) besitzt, welcher an dem Behälterrohr (11) fixiert ist und daß der Dichtring (15) bis zu diesem Sicherungsring (47) hin frei beweglich ist.

23. Gasfeder nach einem der Ansprüche 1 bis 22, **dadurch gekennzeichnet,** daß der Wurzelteil (15a) zur Achse (X-X) des Behälterrohrs im wesentlichen senkrechte Endflächen besitzt.

24. Gasfeder nach einem der Ansprüche 1 bis 23, **dadurch gekennzeichnet,** daß die Kolbenstange (14) innerhalb des Arbeitsraumes (12) einen Kolben (40) trägt, welcher den Arbeitsraum (12) in zwei Teilräume (12a, 12b) unterteilt und daß diese beiden Teilräume (12a, 12b) durch eine gedrosselte Strömungsverbindung (41) miteinander verbunden sind.

## Claims

1. Pneumatic spring comprising a container tube (11) which possesses an axis (X-X) and two ends and limits a cavity (12, 13), a piston rod guide (18) at least at one end of the container tube (11), a piston rod (14) guided through the piston rod guide (18) in the axial direction (X-X) of the container tube and a sealing arrangement (15, 17) at the one end, wherein this sealing arrangement (15, 17) is designed with a first axially external sealing unit (17) and a second axially internal sealing unit (15), wherein the second sealing unit (15) is formed by a sealing ring (15) of elastomeric material, wherein this sealing ring (15) rests in a sealing manner on an internal peripheral face (11a) of the container tube (11) and on an external peripheral face (14a) of the piston rod (14), wherein a fluid chamber (13) is formed between the first sealing unit (17) and the second sealing unit (15), wherein this fluid chamber (13) contains a fluid, wherein a working chamber (12) is formed between the second sealing unit (15) and the other end of the container tube (11), wherein this working chamber (12) contains a volume of gas under pressure, characterised in that the sealing ring (15) - as observed in a longitudinal section containing the axis (X-X) of the container tube (11) - possesses a radially external root part (15a) and a radially internal lip part (15b), wherein the root part (15a) rests with sealing beads (20) on the internal peripheral face (11a) of the container tube (11), wherein an approximately triangularly radially inwardly tapered sealing edge part (15c) which rests on the peripheral face (14a) of the piston rod (14) is provided at the radially internal end of the lip part (15b) and wherein the axial dimension of the lip part (15b) at the base of the sealing edge part (15c) is substantially smaller than the axial dimension of the root part (15a).

2. Pneumatic spring according to claim 1, characterised in that the root part (15a) has a respective sealing bead (20) at its axially spaced ends.

3. Pneumatic spring according to claim 2, characterised in that at least one further sealing bead (20) is arranged between the terminal sealing beads (20).

4. Pneumatic spring according to one of claims 1 to 3, characterised in that the sealing beads (20) have an undulating profile - as observed in the section containing the axis.

5. Pneumatic spring according to one of claims 1 to 4, characterised in that the radial dimension of the root part (15a) is less than 50%, preferably about 40%, of the radial spacing between the external peripheral face (14a) of the piston rod (14) and the internal peripheral face (11a) of the container tube (11).

6. Pneumatic spring according to one of claims 1 to 5, characterised in that the lip part (15b) is arranged in the central region of the axial dimension of the root part (15a).

7. Pneumatic spring according to one of claims 1 to 6, characterised in that the lip part (15b) is defined by two substantially continuously extending, concavely curved flanks (43, 44) - as observed in the section containing the axis.

8. Pneumatic spring according to claim 7, characterised in that each flank (43, 44) possesses, at its radially external end, a tangent which encloses a small acute angle with the axis (X-X) of the container tube (11) and in that each flank (43, 44) possesses, at its radially internal end, a tangent which is substantially perpendicular to the axis (X-X).

9. Pneumatic spring according to one of claims 1 to 8, characterised in that the axial dimension of the lip part (15b) at the base of the sealing edge part (15c), namely at a radial location (B) which is removed from the external peripheral face (14a) of the piston rod (14) by a distance which amounts to about 15 to 20% of the radial spacing between the external peripheral face (14a) of the piston rod (14) and the internal peripheral face (11a) of the container tube (11) amounts to less than 50%, preferably about 35%, of the axial dimension of the root part (15a).

10. Pneumatic spring according to one of claims 1 to 9, characterised in that the sealing ring (15) is approximately symmetrical with respect to a plane of symmetry (S-S) perpendicular to the axis (X-X) of the container tube (11).

11. Pneumatic spring according to one of claims 1 to 10, characterised in that the sealing ring (15) has distinguishing features (27) which provide the distinction between the two axial ends of the sealing ring (15).

12. Pneumatic spring according to one of claims 1 to 11, characterised in that the sealing edge part (15c) has a bead-shaped rounded sealing edge (23) for resting on the external peripheral face (14a) of the piston rod (14).

13. Pneumatic spring according to one of claims 1 to 11, characterised in that the sealing edge part (15c) has a sharp-edged sealing edge (24) for resting on the external peripheral face (14a) of the piston rod (14).

14. Pneumatic spring according to one of claims 1 to 13, characterised in that the triangular sealing edge part (15c) is designed with two sides of a triangle (15e, 15f) which converge toward the sealing edge (29), are substantially equal in length and enclose equally large angles (30, 31) with the axis (X-X) of the container tube.

15. Pneumatic spring according to one of claims 1 to 13, characterised in that the triangular sealing edge part (15c) is designed with two sides of a triangle (15e, 15f) which are of different lengths, converge toward the sealing edge (24), of which the longer one (15f) encloses a smaller acute angle (26) with the axis (X-X) of the container tube (11) and the shorter one (15e) encloses a greater acute angle (25) with the axis (X-X) of the container tube (11).

16. Pneumatic spring according to claim 15, characterised in that the greater acute angle (25) is about three to five times as great as the smaller acute angle (26).

17. Pneumatic spring according to one of claims 15 and 16, characterised in that the longer side of a triangle (15f) faces the working space (12) and the shorter side of a triangle (15e) faces the fluid space (13).

18. Pneumatic spring according to one of claims 1 to 17, characterised in that the working space (12) also contains fluid.

19. Pneumatic spring according to one claims 1 to 18, characterised in that the sealing ring (15) can be fixed toward the other end of the pneumatic spring (10) by stop means (46, 16).

20. Pneumatic spring according to claim 19, characterised in that the stop means (16, 46) comprise a radially inwardly deformed bead (46) of the container tube (11) and a spacer sleeve (16) axially striking this bead (46).

21. Pneumatic spring according to one of claims 1 to 20, characterised in that the sealing ring (15) is freely movable toward the first sealing unit (17) and is supported by the fluid contained in the fluid chamber (13).

22. Pneumatic spring according to one of claims 1 to 21, characterised in that the first sealing unit (17) has, on its side facing the other end of the container tube, a securing ring (47) which is fixed on the container tube (11) and in that the sealing ring (15) is freely movable up to this securing ring (47).

23. Pneumatic spring according to one of claims 1 to 22, characterised in that the root part (15a) possesses end faces which are substantially perpendicular to the axis (X-X) of the container tube.

24. Pneumatic spring according to one of claims 1 to 23, characterised in that the piston rod (14) carries, inside the working space (12), a piston (40) which divides the working space (12) into two partial spaces (12a, 12b) and in that these two partial spaces (12a, 12b) are connected to one another by a throttled flow connection (41).

**Revendications**

1. Ressort pneumatique, comprenant un tube réservoir (11), qui présente un axe (X-X) et deux extrémités et délimite un espace creux (12,13), un guidage de tige de piston (18), au moins à une extrémité du tube réservoir (11), une tige de piston (14) guidée dans le guidage de tige de piston (18), et un dispositif d'étanchéité (15,17) à cette extrémité,
ce dispositif d'étanchéité (15,17) étant réalisé avec un premier ensemble d'étanchéité (17) extérieur axialement, et un deuxième ensemble d'étanchéité (15) intérieur axialement,
le deuxième ensemble d'étanchéité (15) étant formé par une bague d'étanchéité (15) réalisée en un matériau élastomère,
cette bague d'étanchéité (15) appuyant de façon étanche sur une surface périphérique intérieure (11a) du tube réservoir (11) et sur une surface périphérique extérieure (14a) de la tige de piston (14),
une chambre de liquide (13) étant formée entre le premier ensemble d'étanchéité (17) et le deuxième ensemble d'étanchéité (15),
cette chambre de liquide (13) contenant un liquide,
une enceinte de travail (12) étant formée entre le deuxième ensemble d'étanchéité (15) et l'autre extrémité du tube réservoir (11),
cette enceinte de travail (12) contenant un volume de gaz sous pression,
caractérisé en ce que,
vue en une coupe passant par l'axe (X-X) du tube réservoir (11), la bague d'étanchéité (15) comporte une partie en forme de racine radialement extérieure (15a) et une partie en forme de lèvre radialement intérieure (15b),

la partie en forme de racine (15a) appuyant par des bourrelets d'étanchéité, (26) sur la surface périphérique intérieure (11a) du tube réservoir (11),

une partie formant arête d'étanchéité (15c), à peu près triangulaire, effilée en allant radialement vers l'intérieur, étant prévue à l'extrémité radialement intérieure de la partie en forme de lèvre (15b) et appuyant sur la surface périphérique (14a) de la tige de piston (14),

et, à la base de la partie formant arête d'étanchéité (15c), la dimension axiale de la partie en forme de lèvre (15b) est notablement inférieure à la dimension axiale de la partie en forme de racine (15a).

2. Ressort pneumatique selon la revendication 1, caractérisé en ce que la partie en forme de racine (15a) présente sur chacune de ses extrémités espacées axialement un bourrelet d'étanchéité (20).

3. Ressort pneumatique selon la revendication 2, caractérisé en ce qu'au moins un autre bourrelet d'étanchéité (20) est disposé entre les bourrelets d'étanchéité (20) d'extrémité.

4. Ressort pneumatique selon l'une des revendications 1 à 3, caractérisé en ce que, vus dans une coupe passant par l'axe, les bourrelets d'étanchéité (20) ont un profil ondulé.

5. Ressort pneumatique selon l'une des revendications 1 à 4, caractérisé en ce que la dimension radiale de la partie en forme de racine (15a) est inférieure à 50%, de préférence est d'à peu près 40%, à la distance radiale entre la surface périphérique extérieure (14a) de la tige de piston (14) et la surface périphérique intérieure (11a) du tube réservoir (11).

6. Ressort pneumatique selon l'une des revendications 1 à 5, caractérisé en ce que la partie en forme de lèvre (15b) est disposée dans la zone centrale de la dimension axiale de la partie en forme de racine (15a).

7. Ressort pneumatique selon l'une des revendications 1 à 6, caractérisé en ce que, vue en une coupe passant par l'axe, la partie en forme de lèvre (15b) est définie par deux flancs (43,44) à courbure concave sensiblement constante.

8. Ressort pneumatique selon la revendication 7, caractérisé en ce qu'à son extrémité radialement extérieure, chaque flanc (43,44) comporte une tangente qui fait un petit angle aigu avec l'axe (X-X) du tube réservoir (11), et en ce que chaque flanc (43,44) comporte à son extrémité radialement intérieure une tangente sensiblement perpendiculaire à l'axe (X-X).

9. Ressort pneumatique selon l'une des revendications 1 à 8, caractérisé en ce que la dimension axiale de la partie en forme de lèvre (15b) à la base de la partie formant arête d'étanchéité (15c), à savoir en un emplacement radial (a) éloigné de la surface périphérique extérieure (14a) de la tige de piston (14), d'une distance valant à peu près 15 à 20% de la distance radiale entre la surface périphérique extérieure (14a) de la tige de piston (14) et la surface périphérique intérieure (11a) du tube réservoir (11), qui est inférieure à 50% de la dimension axiale de la partie en forme de racine (15a), et de préférence égale à sensiblement 35% de cette dimension.

10. Ressort pneumatique selon l'une des revendications 1 à 9, caractérisé en ce que la bague d'étanchéité (15) est à peu près symétrique par rapport à un plan de symétrie (S-S) perpendiculaire à l'axe (X-X) du tube réservoir (11).

11. Ressort pneumatique selon l'une des revendications 1 à 10, caractérisé en ce que la bague d'étanchéité (15) présente des caractéristiques de différenciation (27), qui permettent d'effectuer une distinction entre les deux extrémités axiales de la bague d'étanchéité (15).

12. Ressort pneumatique selon l'une des revendications 1 à 11, caractérisé en ce que la partie formant arête d'étanchéité (15c) présente une arête d'étanchéité (23) arrondie en forme de bourrelet, pour l'appui sur la surface périphérique extérieure (14a) de la tige de piston (14).

13. Ressort pneumatique selon l'une des revendications 1 a 11, caractérisé en ce que la partie formant arête d'étanchéité (15c) présente une arête d'étanchéité (24) à bords vifs, pour l'appui sur la surface périphérique extérieure (14a) de la tige de piston (14).

14. Ressort pneumatique selon l'une des revendications 1 à 13, caractérisé en ce que la partie formant arête d'étanchéité triangulaire (15c) est réalisée avec deux côtés de triangle (15e,15f) s'étendant vers l'arête d'étanchéité (29), de longueurs sensiblement égales et faisant respectivement avec l'axe (X-X) du tube réservoir des angles (30,31) grands et égaux.

**15.** Ressort pneumatique selon l'une des revendications 1 à 13, caractérisé en ce que la partie formant arête d'étanchéité triangulaire (15c) est réalisée avec deux côtés de triangle (15e,15f) s'étendant vers l'arête d'étanchéité (24), de longueurs différentes, le côté de triangle le plus long (15f) faisant avec l'axe (X-X) du tube réservoir (11) un petit angle aigu (26) et le côté de triangle le plus court (15e) faisant avec l'axe (X-X) du tube réservoir (11) un plus grand angle aigu (25).

**16.** Ressort pneumatique selon la revendication 15, caractérisé en ce que la valeur du plus grand angle aigu (25) est à peu près égale à trois à cinq fois la valeur du plus petit angle aigu (26).

**17.** Ressort pneumatique selon l'une des revendications 15 et 16, caractérisé en ce que le côté de triangle le plus long (15f) est tourné vers l'enceinte de travail (12) et le côté de triangle le plus court (15e) est tourné vers l'enceinte de liquide (13).

**18.** Ressort pneumatique selon l'une des revendications 1 à 17, caractérisé en ce que l'enceinte de travail (12) contient également du liquide.

**19.** Ressort pneumatique selon l'une des revendications 1 à 18, caractérisé en ce que la bague d'étanchéité (15) est fixée à l'autre extrémité du ressort pneumatique (10) par des moyens de butée (46,16).

**20.** Ressort pneumatique selon la revendication 19, caractérisé en ce que les moyens de butée (16,46) comprennent un bourrelet (46), obtenu par déformation radialement vers l'intérieur du tube réservoir (11), et une douille d'espacement (16) venant en butée en direction axiale sur ce bourrelet (46).

**21.** Ressort pneumatique selon l'une des revendications 1 à 20, caractérisé en ce que la bague d'étanchéité (15) est mobile librement par rapport au premier ensemble d'étanchéité (17) et est assistée par le liquide contenu dans la chambre de liquide (13).

**22.** Ressort pneumatique selon l'une des revendications 1 à 21, caractérisé en ce que le premier ensemble d'étanchéité (17) comporte sur sa face, tournée vers l'autre extrémité du tube réservoir, une bague de sécurité (47) qui est fixée sur le tube réservoir (11), et en ce que la bague d'étanchéité (15) est mobile librement jusqu'à cette bague de sécurité (47).

**23.** Ressort pneumatique selon l'une des revendications 1 à 22, caractérisé en ce que la partie en forme de racine (15a) comporte des surfaces d'extrémité sensiblement perpendiculaires à l'axe (X-X) du tube réservoir.

**24.** Ressort pneumatique selon l'une des revendications 1 à 23, caractérisé en ce que la tige de piston (14) porte à l'intérieur de l'enceinte de travail (12) un piston (40) qui subdivise l'enceinte de travail (12) en deux enceintes partielles (12a,12b), et en ce que ces deux enceintes partielles (12a,12b) sont reliées entre elles par une liaison hydraulique étranglée (41).

# FIG.1

# FIG.2

# FIG.3

# FIG.4